(19) Europäisches Patentamt

European Patent Office

Office européen des brevets

(11) Veröffentlichungsnummer: **0 230 518 B1**

## EUROPÄISCHE PATENTSCHRIFT

(12)

(45) Veröffentlichungstag der Patentschrift: **25.03.92**

(51) Int. Cl.<sup>5</sup>: **F16F 15/00**, B41F 13/00

(21) Anmeldenummer: **86113827.9**

(22) Anmeldetag: **06.10.86**

(54) **Verfahren und Vorrichtung zum Dämpfen von Torsionsschwingungen von Offset-Rollenrotationsdruckmaschinen in Linienbauweise.**

(30) Priorität: **15.11.85 DE 3540645**

(43) Veröffentlichungstag der Anmeldung:
**05.08.87 Patentblatt 87/32**

(45) Bekanntmachung des Hinweises auf die Patenterteilung:
**25.03.92 Patentblatt 92/13**

(84) Benannte Vertragsstaaten:
**CH DE FR GB IT LI SE**

(56) Entgegenhaltungen:
EP-A- 0 081 594          DE-A- 2 516 462
DE-A- 3 318 250          GB-A- 545 115
GB-A- 2 071 274          US-A- 3 934 459

IEE PROCEEDINGS vol. 129, no. 5, 1982, OLD WOKING,SURREY,GB Seite 182 - 188; Hiroshi Kurokui et al.: "Electrical vibration damper"

(73) Patentinhaber: **Koenig & Bauer Aktiengesellschaft**
**Friedrich-Koenig-Strasse 4 Postfach 60 60**
**W-8700 Würzburg 1(DE)**

(72) Erfinder: **Schaede, Johannes Georg**
**Ludwigkai 28**
**W-8700 Würzburg(DE)**
Erfinder: **Bolza-Schünemann, Claus August**
**Pilgerstrasse 63**
**CH-5405 Dättwil(CH)**

## Beschreibung

Die Erfindung betrifft ein Verfahren und eine Vorrichtung zur Durchführung des Verfahrens zum Verbessern der Druckqualität und der Produktionsgeschwindigkeit von Offset-Rollenrotationsdruckmaschinen in Linienbauweise gemäß den Oberbegriffen der Ansprüche 1 und 2.

Es ist bekannt, daß verschiedene Anreger die Massen einer Offset-Rollenrotationsdruckmaschine zum Torsionsschwingen anregen, wobei vor allem niederfrequente Schwingungen (3 - 16 Hz) das Druckergebnis negativ beeinflussen können.

So wird in der DE-A-33 18 250 beschrieben wodurch eine torsionsschwingungsfähige Rollenrotationsdruckmaschine zu Torsionsschwingungen angeregt wird und wie sich derartige Schwingungen auf ein Druckprodukt auswirken.

Aus der Veröffentlichung IEE Proceedings, Bd.2, Teil D, Nr.5, September 1982, Old Woking, Surrey, Great Britain, Hiroshi Kurokui et al., "Electrical vibration damper", S. 182 bis 188, ist es bekannt, daß ein Torsionsschwingungsmoment an einem Elektromotor fortlaufend gemessen und in ein Spannungssignal umgeformt wird. Dieses Signal beeinflußt mittels einer Regelstrecke ein Stellglied, welches fortlaufend ein Moment erzeugt, das dem Torsionsschwingungsmoment fortlaufeud entgegengesetzt zugeführt wird.

Der Erfindung liegt die Aufgabe zugrunde, ein Verfahren und eine Vorrichtung zur Durchführung des Verfahrens zu schaffen, mit denen die Druckqualität verbessert und die Produktionsgeschwindigkeit in Linien-Offset-Rollen-Rotationsdruckmaschinen weiter erhöht werden kann.

Die Aufgabe wird durch die Merkmale der kennzeichnenden Teile der Ansprüche 1 und 2 gelöst.

Die mit der Erfindung erzielbaren Vorteile bestehen insbesondere darin, daß die Druckqualität und die Produktionsgeschwindigkeit in Linien-Offset-Rotationsdruckmaschinen weiter verbessert bzw. erhöht werden kann. Die vorgeschlagenen Maßnahmen sind einfach und nicht teuer, so daß auch nachträgliche Torsionsschwingungsdämpfungen ohne großen Konstruktionsänderungen möglich sind. Teure Einzelantriebe für die einzelnen Druckwerke werden nicht benötigt.

Ein Beispiel der Erfindung ist in der Zeichnung dargestellt und wird unter Bezugnahme auf die Zeichnung näher beschrieben.

Es zeigen

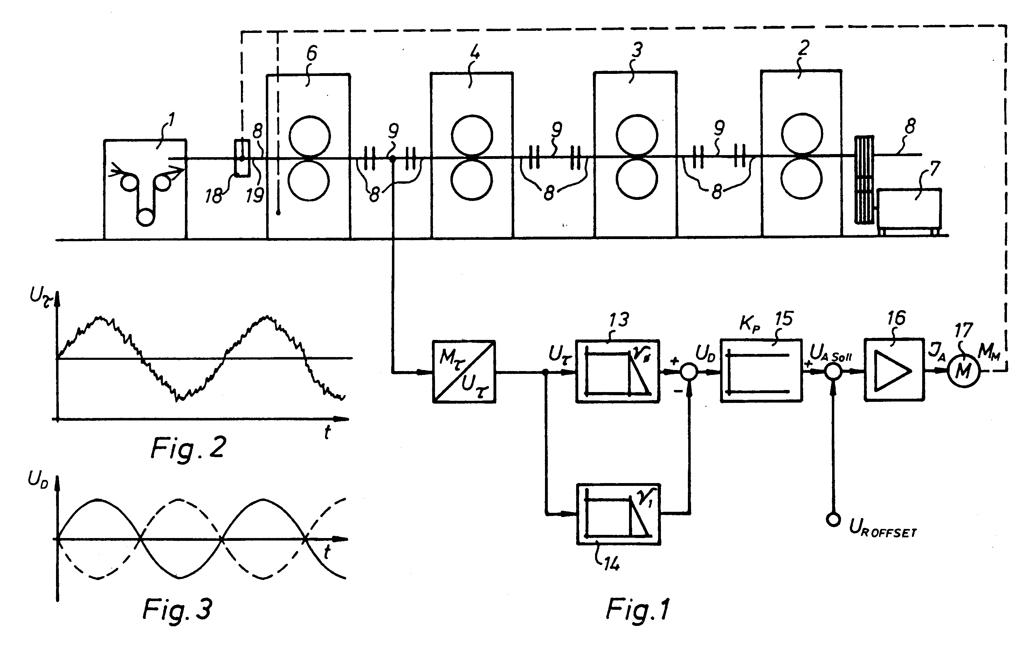

Fig. 1    eine Offset-Rollenrotationsdruckmaschine in Linienbauweise mit einer Einrichtung zum Dämpfen der Torsionsschwingungen,

Fig. 2    niederfrequentes, der Torsionsschwingung proportionales Meß-Signal $U_r$ = f (t),

Fig. 3    ausgefiltertes Signal $U_D$ = f (t).

Eine Offset-Rollenrotationsdruckmaschine in Linienbauweise besteht in der Regel u. a. aus einem Einzugswerk 1, einer Mehrzahl von Offsetdruckwerken 2, 3, 4, 6 und einem Falzwerk (nicht dargestellt). Die Offsetdruckwerke 2, 3, 4, 6 werden von einem in bekannter Weise drehzahlgeregelten Gleichstrommotor 7 über eine durchgekuppelte Längswelle 8 angetrieben. Der Gleichstrommotor 7 treibt hierbei auf die Längswelle 8 zwischen Falzwerk und erstem Druckwerk 2 an. Zwischen den Druckwerken 4 / 6 ist also in der Nähe des freien Endes der Torsionsschwinger eine, an sich bekannte Drehmomentmeßwelle 9 in den Längswellenzug 8 starr einkuppelt.

Mit der Drehmomentmeßwelle 9 werden die Drehmomente $M_r$ = f (t) der Torsionsschwingung der Mehrmasse-Torsionsschwinger z. B. Offsetdruckwerke 2, 3, 4, 6 gemessen und als proportionale elektrische Signale $U_r$ = f (t) an einen Tief-Bandpaß, der z. B. aus parallelgeschalteten Tiefpässen 13 und 14 besteht, abgegeben. Der Durchlaßbereich der Tiefpässe 13 und 14 kann wahlweise verändert werden und so der Durchlaßbereich des Bandpasses eingestellt werden. Die Tiefpässe 13 und 14 werden so ausgewählt, daß sich ein scharfer Durchlaßbereich z. B. zwischen 4 und 16 Hz ergibt. Die niederfrequente Ausgangsspannung $U_D$ des Bandpasses 13, 14 wird einem Regler 15 z. B. P-Regler zugeführt, dessen Ausgangsspannung $U_A$ mit einer einstellbaren Hilfsspannung $U_{R\ Offset}$ zu einem Sollwert $U_{A\ soll}$ addiert werden. Mit dem einstellbaren Wert $U_{R\ Offset}$ wird ein Betriebspunkt für das als Gleichstrommotor 17 ausgebildetes Stellglied festgelegt, so daß Nichtlineatitäten z. B. Losspiel vermieden wird. Der Sollwert $U_{A\ soll}$ steuert einen Verstärker 16 z. B. einen Vierquadranten-Thyristorsatz oder Transistorverstärker, der eine Regelgröße z. B. eine Ankerspannung für einen zu regelnden Ankerstrom $J_A$ für einen Gleichstrommotor 17 liefert. Der Gleichstrommotor 17 z. B. Scheibenläufermotor treibt über ein normales Stirnradgetriebe 18 auf ein Ende 19 der Längswelle 8 nach dem jeweils letzten eingekuppelten Druckwerk z. B. Druckwerk 6 ein. Das vom Stellglied 17 erzeugte Moment $M_M$ ist jeweils an der Nähe des freien Endes 19 der Längswelle 8, - im Beispiel zwischen den Druckwerken 4 - 6 gemessenen Torsionsschwingungsmoment $M_r$ entgegensetzt. Die Größe des entgegengesetzten Momentes $M_M$ ist abhängig von der Torsionsschwingungserregerleistung und kann gleich groß oder etwas kleiner z. B. 5 - 10% als diese sein.

Zusammenfassend ist zu sagen, daß eine Torsionsschwingung $M_r$ in der Nähe eines freien Endes 19 eines Torsionsschwingers 2, 3, 4, 6 gemessen wird und ein der Torsionsschwingung $M_r$ pro-

portionales, elektrisches Signal $U_r$ einem Filter 13, 14 zugeführt wird. Das Signal $U_r$ wird im Filter 13, 14 derart gefiltert, daß er ein niederfrequentes Ausgangssignal $U_D$ abgibt, das nur noch die Anteile der den Druckprozeß störenden, niederfrequenten Torsionsschwingungen enthält. Dieses Filterausgangssignal $U_D$ wird einem elektronischen Regler (Verstärker 16) zugeführt, daß dort erzeugte, dem $U_D$ proportionale Signal $U_{A\ soll}$ wird über Verstärker 16 einem Stellglied 17 zugeführt, welches ein Moment auf das Ende 19 der Längswelle ausübt, daß in jedem Zeitpunkt der Torsionsschwingung des Schwingers entgegenwirkt, d. h. entgegengesetzt wirkt. Regler 15 und Verstärker 16 können zu einer Regelstrecke zusammengefaßt werden.

Selbstverständlich können als Regelstrecke und Stellglieder auch hydraulische oder pneumatische Mittel (Regler und Motoren) eingesetzt werden, sofern sie eine schnelle Regelung zulassen.

| 1 | Einzugswerk |
| 2 | Offsetdruckwerk |
| 3 | Offsetdruckwerk |
| 4 | Offsetdruckwerk |
| 6 | Offsetdruckwerk |
| 7 | Gleichstrommotor |
| 8 | Längswelle |
| 9 | Drehmomentmeßwelle |
| 13 | Tiefpaß, erster |
| 14 | Tiefpaß, zweiter |
| 15 | Regler |
| 16 | Verstärker |
| 17 | Gleichstrommotor |
| 18 | Getriebe |
| 19 | Ende, Längswelle (8) |

## Patentansprüche

1. Verfahren zum Verbessern der Druckqualität und der Produktionsgeschwindigkeit von Offset-Rollenrotationsdruckmaschinen in Linienbauweise, mit mehreren Offsetdruckwerken (2,3,4,6) und einem Falzwerk, die durch eine gemeinsame Längswellen (8) antriebsverbunden sind, wobei der Antrieb der Längswelle (8) zwischen dem Falzwerk und dem in Antriebsfolge ersten Druckwerk (2) erfolgt, dadurch gekennzeichnet, daß ein Torsionsschwingungsmoment ($M_r$) an der Längswelle (8) abtriebsseitig am letzten Offsetdruckwerk (6) oder an der Längswelle (8) zwischen dem letzten und vorletzten Offsetdruckwerk (6,4) fortlaufend gemessen und in ein Signal ($U_r$) umgeformt wird, daß dieses Signal ($U_r$) einem Band-Tiefpaß (13, 14) zugeführt wird dessen Ausgangsspannung ($U_D$) mittels einer Regelstrecke (15, 16) ein Stellglied (17) beeinflußt, welches fortlaufend ein Moment ($M_M$) erzeugt, welches dem Torsionsschwingungsmoment ($M_r$) der gekuppelten Offsetdruckwerke (2, 3, 4, 6) an der Längswelle (8) abtriebsseitig am letzten Offsetdruckwerk (6) oder an der Längswelle (8) zwischen dem letzten und vorletzten Offsetdruckwerk (6,4) fortlaufend entgegengesetzt zugeführt wird.

2. Vorrichtung zur Durchführung des Verfahrens nach Anspruch 1, dadurch gekennzeichnet, daß eine das Torsionsschwingungsmoment ($M_r$) messende und in ein entsprechendes Signal umwandelnde Einrichtung (9), eine dieses Signal verarbeitende Regelstrecke (15, 16) und ein dem Torsionsschwingungsmoment ($M_r$) entgegengesetztes Moment ($M_D$) erzeugendes Stellglied (17) vorgesehen sind.

## Claims

1. Process for improving the printing quality and the production speed of offset web-fed rotary printing machines of linear structure, having a plurality of offset printing couples (2, 3, 4, 6) and a fold unit which are drive-connected by means of a common longitudinal shaft (8), the longitudinal shaft (8) being driven between the fold unit and the printing couple (2) which is first in drive sequence, characterized in that a torsion oscillation moment ($M_r$) is continuously measured at the longitudinal shaft (8) on the output side on the last offset printing couple (6) or on the longitudinal shaft (8) between the last and the penultimate offset printing couple (6, 4) and is converted into a signal ($U_r$), in that this signal ($U_r$) is supplied to a low-pass band filter (13, 14), whereof the output voltage ($U_D$), by means of a regulating section (15, 16), influences an actuating unit (17) which continuously produces a moment ($M_M$) which is supplied continuously in opposition to the torsion oscillation moment ($M_r$) of the coupled offset printing couples (2, 3, 4, 6) at the longitudinal shaft (8) on the output side on the last offset printing couple (6) or on the longitudinal shaft (8) between the last and the penultimate offset printing couple (6, 4).

2. Apparatus for carrying out the process according to Claim 1, characterized in that a device (9) measuring the torsion oscillation moment ($M_r$) and converting it into an appropriate signal, a regulating section (15, 16) processing this signal and an actuating unit (17) producing a moment ($M_D$) opposed to the torsion oscillation moment ($M_r$) are provided.

## Revendications

1. Procédé d'amélioration de la qualité d'impression et de la vitesse de production dans des presses rotatives du type offset utilisées en ligne, avec plusieurs groupes d'impression (2,3,4,6) et un groupe de pliage, reliés au moyen d'un arbre longitudinal (8) commun, l'entraînement de l'arbre longitudinal (8) s'effectuant entre le groupe de pliage et le groupe d'impression (2) se trouvant être le premier dans l'ordre d'entraînement, caractérisé en ce qu'on mesure de façon continue un couple de vibration de torsion ($M_T$) sur l'arbre longitudinal (8), côté entraîné, sur le dernier groupe d'impression offset (6) ou sur l'arbre longitudinal (8), entre les dernier avant dernier groupes d'impression offset (6,4) et qu'on le converti en un signal ($U_T$), en ce que ce signal ($U_T$) est amené à un filtre passe bande (13,14) dont la tension de sortie ($U_D$) provoque, au moyen d'un circuit de régulation (15,16), une correction d'un organe de réglage (17) qui produit de façon continue un couple de rotation ($M_M$) qui est appliqué de façon antagoniste, en continu, sur l'arbre longitudinal (8), côté entraîné, sur le dernier groupe d'impression offset (6) ou sur l'arbre longitudinal (8), entre les dernier avant dernier groupes d'impression offset (6,4)

2. Dispositif pour la mise en oeuvre du procédé selon la revendication 1, caractérisé en ce que sont prévus un dispositif (9), qui mesure le couple de vibration de torsion ($M_T$) et qui le converti en un signal correspondant, un circuit de régulation (15,16) qui assure le traitement de ce signal et un organe de réglage (17) qui produit un couple de rotation ($M_M$) appliqué de façon antagoniste au couple de vibration de torsion ($M_T$).

Fig. 2

Fig. 3

Fig. 1

EP 0 230 518 B1